# EUROPEAN PATENT APPLICATION

(11) **EP 1 892 262 A1**
(43) Date of publication of application: **27.02.2008**
(21) Application number: 07118049.1
(22) Date of filing: 14.05.2004
(51) Int. Cl.: C08K 5/3492, C08K 5/3495, C08K 3/00, C08K 5/132

(54) **Highly compatible and non-migratory polymeric UV-Absorber**

(30) Priority: 26.05.2003 EP 03405374; 27.10.2003 EP 03103976
(62) Divisional of application: 04741573.2
(71) Applicant: Ciba Specialty Chemicals Holding Inc., 4057 Basel (CH); Ciba Specialty Chemicals S.p.A., 40037 Sasso Marconi (BO) (IT)
(72) Inventor: Lazzari, Dario, 40138, Bologna (IT); Vitali, Manuele, 40141, Bologna (IT); Bonora, Michela, 40135, Bologna (IT); Zagnoni, Graziano, 40038, Vergato (BO) (IT); Morvillier, Marie-Raphael, 92500, Rueil-Malmaison (FR)

(57) **Abstract**

The present invention relates to highly compatible hydroxyphenyltriazine UV-absorbers and to their use in organic polymers, especially for protecting the contents of transparent plastic packages such as pharmaceuticals, cosmetics, personal care products, shampoos and the like, and especially foodstuffs such as beverages, fresh vegetables or meat, from the deleterious effects of ultraviolet radiation. Especially advantageous is the combined use of a UV absorber and an oxygen scavenger. It has been found that certain highly compatible tris-aryl-s-triazines are especially effective towards this end when incorporated in the containers or films in which such materials are stored.

## Description

The present invention relates to highly compatible hydroxyphenyltriazine UV-absorbers and to organic polymer material, especially thermoplastic polymer films, containing them. The polymer material thus obtained may be used as packaging films, protecting packed foodstuffs, beverages, pharmaceuticals, cosmetics, personal care products, shampoos and the like from the deleterious effects of ultraviolet radiation. It is further useful in protecting plants in greenhouses. The invention further pertains to a method of preventing photooxidation of packed food by combined use of a UV absorber and an oxygen scavenger. It has been found that certain tris-aryl-s-triazines are especially effective when incorporated in the containers or films in which such materials are stored. Compounds of present invention are further effective in cosmetic formulations for the protection of human (or animal) skin or hair against UV radiation.

Also many packaged products such as certain fruit juices, soft drinks, beer, wines, food products, dairy products, cosmetics, shampoos, vitamins and pharmaceuticals are deleteriously affected, i.e. degraded, by the effects of ultraviolet (UV) light when packaged in plastic containers which allow the transmission of such light.

The use of UV absorbers towards protecting bottle and film contents is well known. However there is a trend towards the use of clear or lightly colored containers. More aesthetically pleasing containers may be formed from clear plastics, which also allow one to view the contents. Unfortunately, clear and lightly colored containers and films allow the transmission of significant portions of ultraviolet light, i.e. light in the range of about 280 to about 400 nm. Further, there is a trend towards more light-weight and hence thinner walled containers. Thin-walled containers, by virtue of a shorter path length, will allow more UV light to pass. Due to these trends in packaging there is a need for more efficient UV absorbers for use in this area.

Many cooking oils and salad oils are now offered in clear PET [poly(ethylene terephthalate)] packaging. Practically all vegetable or seed-based oils such as soybean, olive, safflower, cottonseed and corn oils contain varying levels of unsaturated olefinic acids or esters (e.g. linoleates), which are susceptible to light-induced degradation. Most plant-based oils also contain natural chlorophyll or other pigment photosensitizers. Pascall et al., J. Food Sci., 60 (5), 1116 (1995), discuss the UV protection of soybean oil with the use of Tinuvin^{®} 326 incorporated into coextruded, multi-layered, polypropylene-based containers. Tinuvin^{®} 326 is a benzotriazole UV absorber, 5-chloro-2-(2-hydroxy-3-tert-butyl-5-methylphenyl)-2H-benzotriazole, available from Ciba Specialty Chemicals Corp.

WO 03/004557 describes some hydroxyphenyltriazine UV absorbers having good persistency in polyolefin films. Plastic containers or films containing durable UV absorbers are also mentioned in WO 01/57124.

Present hydroxyphenyl triazine UV absorbers show excellent compatibility and persistence in a variety of plastic materials and protect these materials from the harmful effects of UV radiation. The same time, these UV absorbers provide efficient and selective UV shielding in greenhouse films, window sheets and packaging materials. Due to extremely long alkyl moieties they are highly compatible with many polymers, allowing thus to incorporate higher amounts of UVA. They are thermally stable and do not exude from the polymer, which is important when in contact with food or beverages.

The present invention relates to a oligo- or polyester formula (I)

-[A-O-D-O]ₓ- (I)

in which
x is a number from 1 to 50;
A is a group of the formula (II) 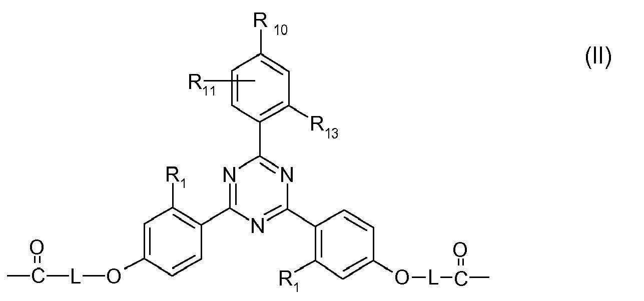 or has one of the meanings given for T;
D is C₄-C₁₂ alkylene or said alkylene substituted by OH or interrupted by O or both substituted by OH and interrupted by O;
L is C₁-C₁₈alkylene; C₅-C₁₂cycloalkylene; C₃-C₁₈alkenylene; or one of said residues substituted by phenyl, C₇-C₁₁alkylphenyl, C₅-C₁₂cycloalkyl, OH, halogen, C₁-C₁₈alkoxy, C₅-
C₁₂cycloalkoxy, C₃-C₁₈alkenyloxy, COOH;
the R₁ are independently of each other H, OR₇ or OH, with the proviso that at least one of R₁ or R₁₃ is OH;
the R₇ are independently of each other hydrogen, C₁-C₁₂alkyl or a radical of formula -L-CO-O-R₉;
R₉ is H, C₁-C₁₈alkyl, C₂-C₁₂hydroxyalkyl;
R₁₀ is hydrogen, C₁-C₄alkyl, Cl, phenyl or a group -OR₇;
R₁₁ is hydrogen or methyl;
R₁₃ is hydrogen, methyl, OH or OR₇; and
T is the divalent acyl residue of an aliphatic or cycloaliphatic dicarboxylic acid of 13 to 60 carbon atoms;
and which contains at least one moiety of formula (II) and at least one moiety T.

In a preferred compound, L is C₁-C₄alkylene, especially C₂-C₄alkylidene or methylene. D is advantageously C₄-C₁₂alkylene or C₄-C₁₀alkylene interrupted by O.

T as the divalent acyl residue of an aliphatic or cycloaliphatic dicarboxylic acid of 13 to 60 carbon atoms includes, for example, aliphatic diacyls wherein the 2 carbonyl groups are interconnected by C₁₁-C₅₈alkylene or-alkenylene or alkylene interrupted by cycloalkylene or cycloalkenylene, each of which is unsubstituted or substituted by alkyl, and containing 11 to 58 carbon atoms in total, preferably 20 to 50 carbon atoms. Alkylene or alkenylene may be branched or unbranched, or, preferably not adjacent to an ethylenic double bond, interrupted by oxygen. In preferred compounds, T is -CO-T'-CO-, wherein T' is C₂₀-C₅₀alkylene or C₂₀-C₅₀alkylene interrupted by one or more oxygen atoms; especially preferred is unbranched C₂₀-C₅₀alkylene. In further preferred compounds, T is -CO-T'-CO-, wherein T' is alkylene interrupted by C₅-C₁₂cycloalkylene or C₅-C₁₂cycloalkenylene or said cycloalkylene or cycloalkenylene substituted by alkyl and containing 11 to 58 carbon atoms, especially 20-50 carbon atoms, in total; especially preferred cycloalkylene is cyclohexylene; especially preferred cycloalkenylene is cyclohexenylene. Valuable spacer groups T' are, for example, of the formula IX 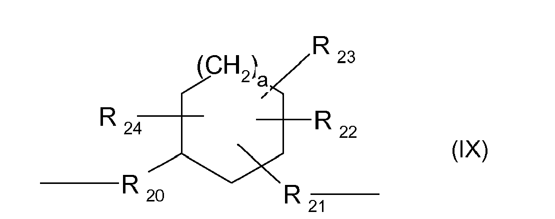 wherein R₂₀ is -(C_{b}H_{2b})- and R₂₁ is -(C_{c}H_{2c})- and
R₂₂, R₂₃ and R₂₄ are -(C_{d}H_{2d})-H, -(CₑH₂ₑ)-H, and -(C_{f}H_{2f})-H, respectively, where a is from the range 0 - 7, and each of the indices b - f is from the range 0 - 20,
with the condition that the sum a + b + c + d + e + f is from the range 15 - 45,
or of the formula X 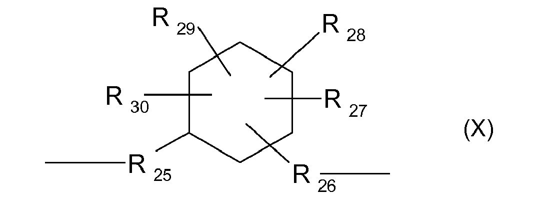 wherein
R₂₅ and R₂₆ each are C₁-C₁₈alkylene and each of R₂₇, R₂₈, R₂₉ and R₃₀, independently, are H or C₁-C₁₈alkyl, and R₂₉ and R₃₀ together may also be a chemical bond, with the condition that the total number of carbon atoms in formula X ranges from 20 to 50.

Of special technical importance are spacer groups T' of the formula X wherein R₂₅ and R₂₆ independently are alkylene of 4 - 12 carbon atoms, each of R₂₇ and R₂₈, independently, are C₄-C₁₂alkyl, while R₂₉ and R₃₀ are hydrogen.

Suitable diacids may be obtained, for example, by dimerization of a mono- with a di-unsaturated fatty acid; the product containing a cycloalkenyl structure may be used as such or is, preferably, hydrogenated before use in the preparation of the present compounds; in the latter case, the hydrogenated diacid often is a mixture of open chain ("alkylene") type and cycloalkylene-interrupted compounds. An example for the preparation of a diacid from fatty acids A and B is given in the following scheme:

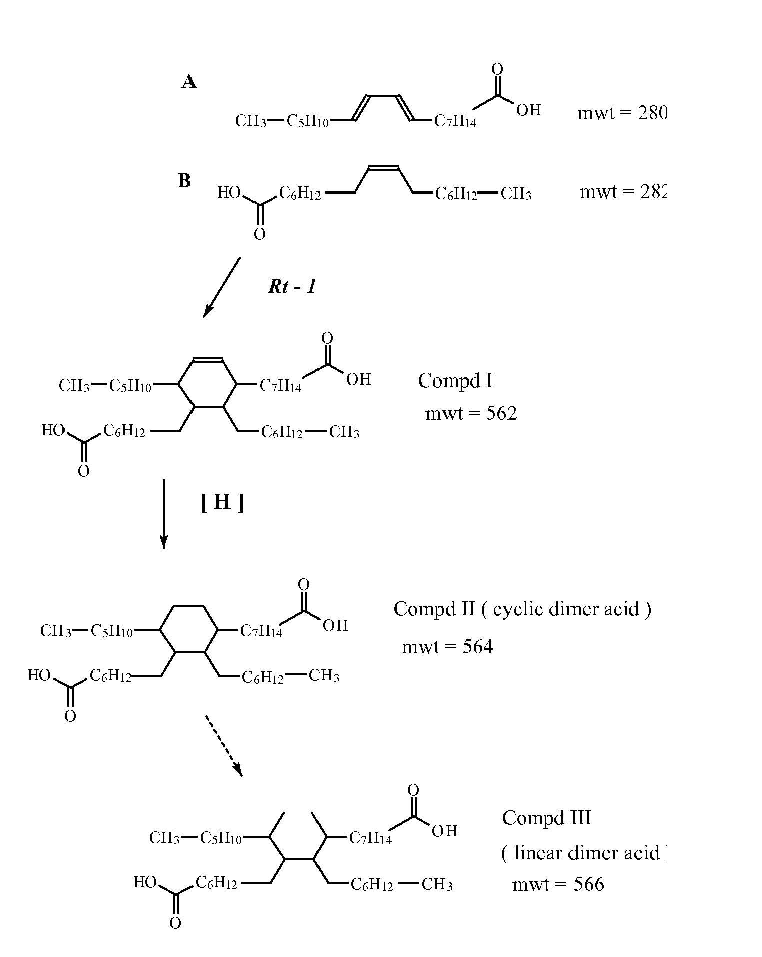

In the compounds of present formula I, most preferably, the R₁ are OH; the R₇ are hydrogen or methyl;
R₁₀ is hydrogen, methyl or a group -OR₇;
R₁₁ is hydrogen;
R₁₃ is hydrogen, OH or methyl.

Terminal groups of the oligomer or polymer of formula (I) usually are -O-D-OR₁₂, or -OR₁₂ if bonded to A (left side of formula 1),
or-A-OR₁₂, such as -T'-COOR₁₂ or -[formula I I]-OR₁₂, or -R₁₂ if bonded to O (right side of formula I),
where R₁₂ is H or C₁-C₈alkyl.

For example, the ester of formula (I) may conform to the formula (III) 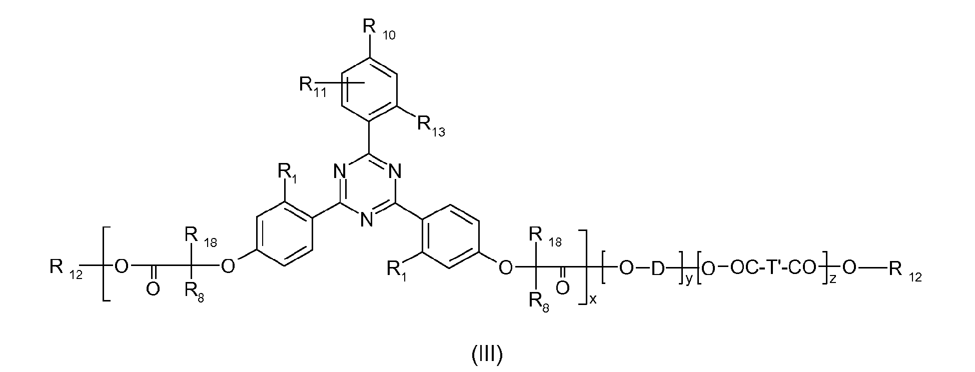 in which
x is a number from 1 to 20;
the number y is at least 1 and ranges from (x + z - 1) to (x + z + 1);
z is a number from 1 to 20; and
R₈ is hydrogen, C₁-C₁₂alkyl; C₅-C₁₂cycloalkyl; C₂-C₁₂alkenyl; phenyl; C₇-C₁₁alkylphenyl; C₁-C₁₂alkyl substituted by phenyl, OH, halogen; C₁-C₁₈alkoxy, C₅-C₁₂cycloalkoxy, C₃-C₁₈alkenyloxy or COOH; especially hydrogen or C₁-C₄alkyl;
R₁₂ is hydrogen or C₁-C₈alkyl;
R₁₈ is hydrogen or C₁-C₄alkyl;
D is C₄-C₈alkylene or C₄-C₁₀oalkylene interrupted by O; and T' is C₂₀-C₅₀alkylene or C₂₀-C₅₀alkylene interrupted by one or more oxygen atoms;
and all other symbols are as defined for formula I above.

T' may also be alkylene interrupted by C₅-C₁₂cycloalkylene or said cycloalkylene, especially cyclohexylene, substituted by alkyl and containing 20-50 carbon atoms in total.

In the oligo- or polyester of formula (III), each of the divalent structural units identified by the indices x and z bond to the structural unit -O-D- identified by the index y, and/or to an end group R₁₂ or OR₁₂.

In compounds of the formula (I), x is preferably from the range 2-50, more preferably from the range 2-20, especially 4-12; the number of triazine moieties of the formula II to diacid residues T preferably ranges from about 1 : 3 to about 10:1, more preferably from about 1 : 1 to about 5 : 1. In compounds of the formula (III), each of x and z are preferably from the range 1-16; more preferably, x is from the range 1-10 and z is ranging from 2-12.

Oligomeric or polymeric esters of the invention such as those of formula I or III usually have a molecular weight within the range 1000 to 50000 g/mol, more preferably 1500 to 20000 g/mol, most preferably 2000 to 10000 g/mol (number average Mn as determined by gel permeation chromatography GPC).

Alkylphenyl is alkyl-substituted phenyl; C₇-C₁₄alkylphenyl embraces examples such as methylphenyl (tolyl), dimethylphenyl (xylyl), trimethylphenyl (mesityl), ethylphenyl, propylphenyl, butylphenyl, dibutylphenyl, pentylphenyl, hexylphenyl, heptylphenyl and octylphenyl.

Phenylalkyl is phenyl-substituted alkyl; C₇-C₁₁phenylalkyl embraces examples such as benzyl, α-methylbenzyl, α-ethylbenzyl, α,α-dimethylbenzyl, phenylethyl, phenylpropyl, phenylbutyl and phenylpentyl.

Alkyl interrupted by O can generally comprise one or more nonadjacent oxygen atom(s). Preferably, a carbon atom of an alkylene chain such as D or T' bonds to not more than 1 heteroatom.

Within the scope of the stated definitions, the alkyl radicals are branched or unbranched alkyl such as methyl, ethyl, propyl, isopropyl, n-butyl, sec-butyl, isobutyl, t-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl and octadecyl.

Alkylene such as of L or D derives from such alkyls by abstraction of an hydrogen atom.

Within the scope of the stated definitions, the alkenyl radicals include allyl, isopropenyl, 2-butenyl, 3-butenyl, isobutenyl, n-penta-2,4-dienyl, 3-methyl-but-2-enyl; n-oct-2-enyl, n-dodec-2-enyl, isododecenyl, n-octadec-2-enyl and n-octadec-4-enyl.

The heavy chains of T, e.g. alkylene groups of T', may have a certain molecular distribution around their main component. Ranges may be, for example, from 22-26, 28-32 or 34-38 C-atoms. It is however also possible that broader ranges are used such as for example from 20 to 40, from 30 to 50 or from 30 to 40 carbon atoms, each for T' in total.

Since the educts for preparing a compound of formula (I) or (III) are commercial products, they may vary within certain specifications. This is particularly the case for high molecular weight diacids from which the T groups are derived, when T is C₂₀-C₆₀alkylene (which may be interrupted as described above).

Commercially available diacids or diacid esters may also contain small amounts of chains below C₂₀. Therefore mixtures of compounds wherein T is a mixture containing up to 10% of diacyl chains below 20 carbon atoms and 90 to 100% of diacyl chains between 20 and 60, particularly between 20 and 40 carbon atoms are also subject of the invention. Percentage is weight percent, based on the total mixture.

The compounds of formula (I) and (III) or precursors thereof can be prepared in analogy to methods described in WO 03/004557 or publications mentioned therein (e.g. EP-A-434 608, H. Brunetti and C.E. Lüthi, Helv. Chim. Acta 55, 1566 (1972), US-3118887, EP-A-165608).

(Poly)esters of formula (I) or (III) are advantageously prepared starting from tris-aryl-triazines containing 2 carboxylic acid groups or suitable derivatives thereof such as acid chloride, anhydride or especially ester groups. Such educts or their homologues are described, inter alia, in US-4826978, US-5736597 (see e.g. columns 11-13), US-5686233, US-5959008 (see e.g. col. 30, line 35, until col. 31, line 11) and a further educt of the same type, e.g. aliphatic, cycloaliphatic or aromatic dicarboxylic acid or derivative thereof containing the group T. For esterification, the dicarboxylic educts are preferably reacted according to methods known in the art with suitable amounts, e.g. 0.9 - 1.1 mol per mol dicarboxyl or equimolar amounts, of a diol HO-D-OH; preferred diols include glycol, glycerine, various polyethylene glycoles, or α,ω-dihydroxyalkanes of various chain lengths such as butanediol, pentanediol, hexanediol, heptanediol, octanediol, nonanediol, decanediol, undecanediol, dodecanediol, tridecanediol, pentadecanediol, octadecanediol, eicosanediol, and mixtures thereof. Reaction can be carried out with or without addition of further components such as solvents (e.g. aliphatic alcohols, ethers, aromatic hydrocarbons or halogenated hydrocarbons such as chlorobenzene, or solvent mixtures) or catalysts, e.g. transesterification catalysts such as mineral or organic (Lewis or Broensted-type) acids or bases. In case that no additional solvent is used, an educt such as the diol or a suitable ester of a dicarboxylic acid may be used in excess and serve simultaneously as a solvent. Temperature and pressure are usually not critical, thus, the reaction often is carried out at temperatures in the range -5°C to 200°C, e.g. between 10 and 170°C, and pressure close to 1 atmosphere, e.g. 10⁴ to about 10⁶ Pa, with or without presence of oxygen, e.g. under nitrogen or argon.

Present invention also pertains to an oligoester or polyester which is obtained by reacting a tris-aryl-triazine of the formula V 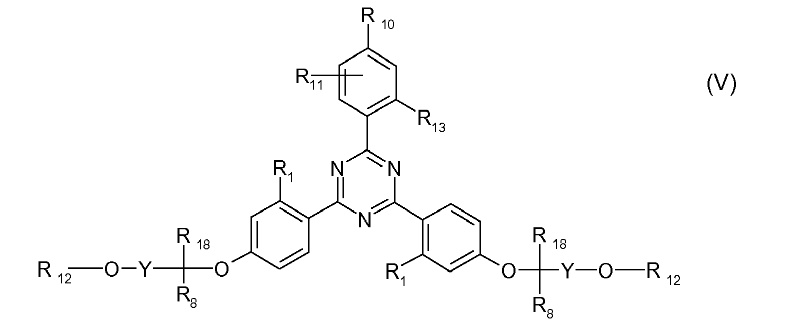 and a compound of the formula R₁₂-O-T-O-R₁₂,
where Y is CO and all other all symbols are as defined above, with a diol HO-D-OH.

Present invention also pertains to a composition protected against the permeation of ultraviolet radiation comprising
(a) an organic polymer material, e.g. a synthetic thermoplastic polymer, and
(b) at least one compound of formula (I) or a mixture thereof.

A further subject of the invention is a transparent plastic container or film, which protects against the deleterious effects of ultraviolet radiation, and which comprises
(a) a transparent, e.g. clear or lightly colored, plastic, and
(b) at least one compound of formula (I) or a mixture thereof.

Definitions and preferences for the compounds of formula (I) are as given above.

Examples for containers are bottles, boxes, blisters or cups, which may be sealed by thick walled materials or, for example, by films. The container may be fully transparent or partly transparent; in such cases, the present compound of the formula I usually is present at least in the transparent part, e.g. the film sealing of a pigmented cup. Examples for goods packed in such containers include food and beverages, cosmetic articles, medicals and pharmaceutic preparations, etc.

Especially in the case of greenhouse films, the present composition may further contain growth promoters, such as component (b) of the compositions disclosed in EP-A-1413599, while present compound of the formula I may be employed as the UVA (component c1 of EP-A-1413599) in these systems.

The compounds are useful for many kinds of plastic materials from which containers, sheets, films and woven or nonwoven fabrics can be made. Examples are given below.
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups lVb, Vb, Vlb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
   6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
   6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
   6c. Hydrogenated aromatic polymers derived from hydrogenation of polymers mentioned under 6a.).
      Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or a-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates (PMMA), polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; ethylene vinylalcohol copolymers (EVOH); as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN), biodegradable polylactones, and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Blends of the aforementioned polymers (polyblends), for example PP/EPDM, Poly-amide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

The compounds of the invention are useful for many kinds of plastic materials from which containers, sheets, films and woven or nonwoven fabrics can be made. Preferred polymer materials, e.g. for films or plastic containers, are a polyolefin, a polyester, a polyvinylalcohol, a polyvinylacetate or a polycarbonate; most preferred, especially for food packaging films or containers, are polyethylenetherephthalate (PET) and polyolefins, in particular polyethylene (PE), polypropylene (PP), low density polyethylene (LDPE), linear low density polyethylene (LLDPE), (VLDPE) and (ULDPE). More preferred materials for sheets are polycarbonate, a polyamide, a polyacryl, or transparent ABS, especially polycarbonate.

Most advantageously, the composition of the invention is a plastic container or film used as a food or medical packaging material; preferably the thickness of the film is from 10 µ to 200 µ, more preferably from 20 µ to 80 µ, and of the plastic container from 200 µ to 1000 µ. Preferably, the compound of formula (I) is present in an amount of from 0.005% to 10%, based on the weight of the plastic material.

Preferably, the organic polymer material is aplastic container or film or sheet wherein the plastic material is transparent, for instance clear or lightly colored.

Especially in case of polyesters, the organic polymer material advantageously may contain an additive for the reduction of acetaldehyde content (see, for example, WO 01/02489, WO 01/23475, WO 02/53643, EP-A-1239006, WO 03/16401) and/or an optical brightener (fluorescent whitener; in analogy to known systems, see, for example, US-5985389, US-6166852). Suitable optical brighteners include, inter alia, compounds of the stilbene, coumarin and bis-benzoxazole classes known for this application and available, inter alia, under the trade names Blankophor®, Eastman®, Fluolite®, Hostalux®, Leukopur®, Uvitex®, Whitefluor®, Eccowhite® from several manufacturers; suitable compounds are, for example, those of CAS Nos. 91-44-1 (4-methyl-7-diethylaminocoumarin); 53850-91-2 (3-phenyl-7-(4-methyl-6-butyloxybenzoxazole)coumarin); 5089-22-5; 5242-49-9; 3333-62-8; 40470-68-6; and especially: 7128-64-5 (2,5-bis(5-tert-butyl benzoxazol-2-yl)thiophene) and/or 1533-45-5 (4,4'-bis(benzoxazol-2-yl)stilbene.

The present UV absorbers may also be incorporated into optical lenses or glasses, such as acryl glasses, or coatings thereon. Preferred materials for optical lenses and glasses, e.g. for sunglasses, are acrylics or polycarbonate, especially polymethyl methacrylate (PMMA).

A further important application is in solar control films or architectural glazings (see, e.g. US-6166852, US-6191199).

Preferably, the thickness of the sheet may vary between about 0.5 to 8 mm, e.g. for solid sheets, to about 3 to 100 mm, e.g. for twin or multiple wall sheets.

Alongside the stabilizer of the invention, the plastic material of the invention may also include other stabilizers or other additives, such as a phenolic antioxidant, a sterically hindered amine and/or a phosphite or phosphonite. Examples for further stabilizers and additives are given below.
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(a-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1 '-yl)phenol, 2,4-dimethyl-6-(1'-methyltridec-1'-yl)phenol and mixtures thereof.
   1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.
   1.4. Tocopherols, for example α-tocopherol, β-tocopherol, γ-tocopherol, δ-tocopherol and mixtures thereof (Vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), 4,4'-bis(2,6-dimethyl-4-hydroxyphenyl)disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(a-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tertbutylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy-2-methylphenyl)pentane.
   1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
   1.8. Hydroxybenzylated malonates, for example dioctadecyl-2,2-bis-(3,5-di-tert-butyl-2-hydroxybenzyl)-malonate, di-octadecyl-2-(3-tert-butyl-4-hydroxy-5-methylbenzyl)-malonate, di-dodecylmercaptoethyl-2,2-bis-(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine Compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
   1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
   1.12. Acylaminophenols, for example 4-hydroxylauranilide, 4-hydroxystearanilide, octyl N-(3,5-di-tert-butyl-4-hydroxyphenyl)carbamate.
   1.13. Esters of 13-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.14. Esters of a-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.15. Esters of 13-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.17. Amides of 13-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)-hydrazide, N,N'-bis[2-(3-[3,5-di-tert-butyl-4-hydroxyphenyl]propionyloxy)ethyl]oxamide (Naugard^{®}XL-1 supplied by Uniroyal).
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1 ,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenlenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)-propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- und dialkylated tert-butyldiphenylamines, 2,3-dihydro-3,3-dimethyl-4H-1,4-benzothiazine, phenothiazine, a mixture of mono- und dialkylated tert-butyl/tert-octylphenothiazines, a mixture of mono- und dialkylated tert-octyl-phenothiazines, N-allylphenothiazin, N,N,N',N'-tetraphenyl-1,4-diaminobut-2-ene, N,N-bis(2,2,6,6-tetramethylpiperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.
2. UV absorbers and light stabilisers
   2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; [R-CH₂CH₂COO-CH₂CH₂-⁆₂- where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]benzotriazole; 2-[2'-hydroxy-3'-(1,1,3,3-tetramethylbutyl)-5'-(a,a-dimethylbenzyl)-phenyl]benzotriazole.
   2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, as for example 4-tertbutyl-phenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
   2.4. Acrylates, for example ethyl a-cyano-β,β-diphenylacrylate, isooctyl α-cyano-β,β-diphenylacrylate, methyl α-carbomethoxycinnamate, methyl α-cyano-p-methyl-p-methoxy-cinnamate, butyl a-cyano-β-methyl-p-methoxy-cinnamate, methyl α-carbomethoxy-p-methoxycinnamate and N-(β-carbomethoxy-β-cyanovinyl)-2-methylindoline.
   2.5. Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.
   2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane-tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decan-2,4-dione, bis(1 -octyloxy-2,2,6,6-tetramethylpiperidyl)sebacate, bis(1-octyloxy-2,2,6,6-tetramethylpiperidyl)succinate, linear or cyclic condensates of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensation product of N,N'-bis(2,2,6,6-tetramethyl-4-piperidyl)hexamethylenediamine and 4-cyclohexylamino-2,6-dichloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro [4,5]decane und epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, diester of 4-methoxy-methylenemalonic acid with 1,2,2,6,6-pentamethyl-4-hydroxypiperidine, poly[methylpropyl-3-oxy-4-(2,2,6,6-tetramethyl-4-piperidyl)]siloxane, reaction product of maleic acid anhydride-α-olefin-copolymer with 2,2,6,6-tetramethyl-4-aminopiperidine or 1,2,2,6,6-pentamethyl-4-aminopiperidine, 5-(2-ethylhexanoyl)oxymethyl-3,3,5-trimethyl-2-morpholinone; of special importance, especially for use in films such as greenhouse films, are bis(2,2,6,6-tetramethyl-4-piperidyl)sebacate;
      bis(1,2,2,6,6-pentamethyl-4-piperidyl)sebacate;
      the condensate of 1-(2-hydroxyethyl)-2,2,6,6-tetramethyl-4-hydroxypiperidine and succinic acid (CAS-No. 65447-77-0);
      N,N',N",N"'-tetrakis(4,6-bis(butyl-(N-methyl-2,2,6,6-tetramethylpiperidin-4-yl)amino)triazin-2-yl)-4,7-diazadecane-1,10-diamine (CAS-No. 106990-43-6); 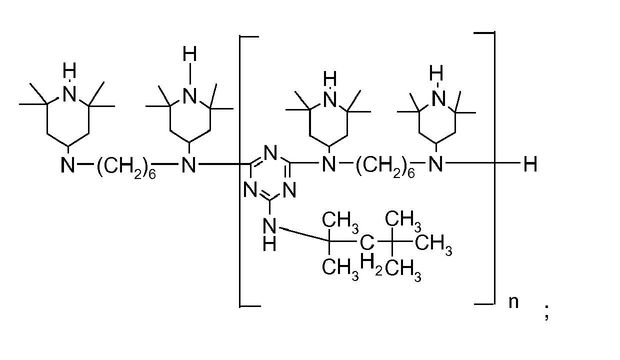 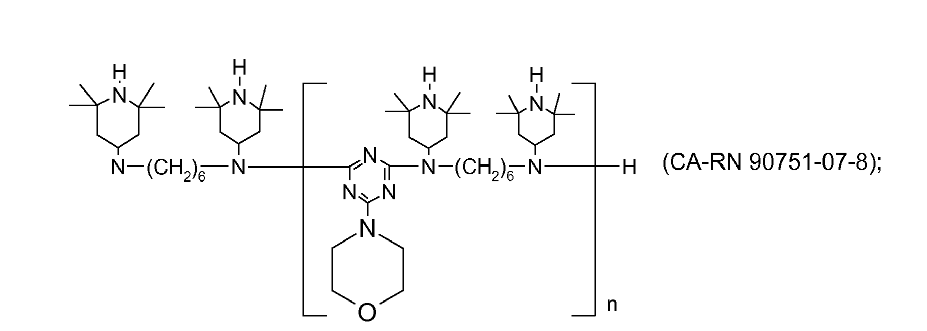 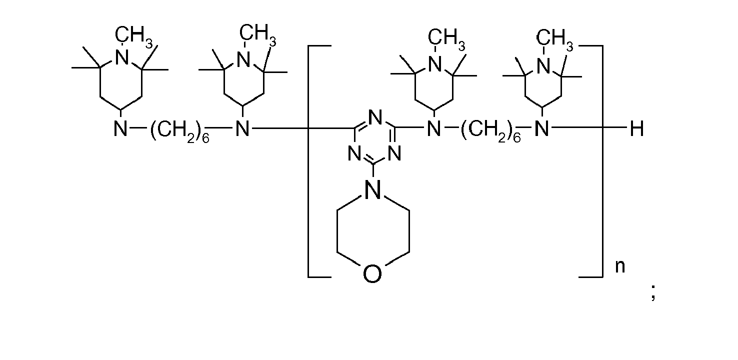 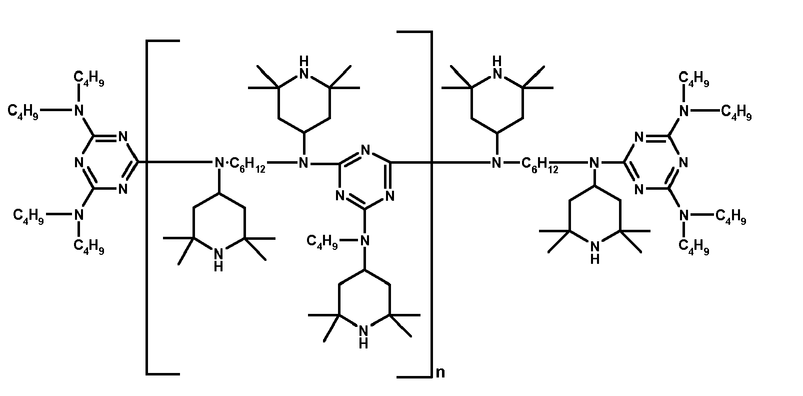 (Chimassorb^{®} 2020, CAS No. 192268-64-7), 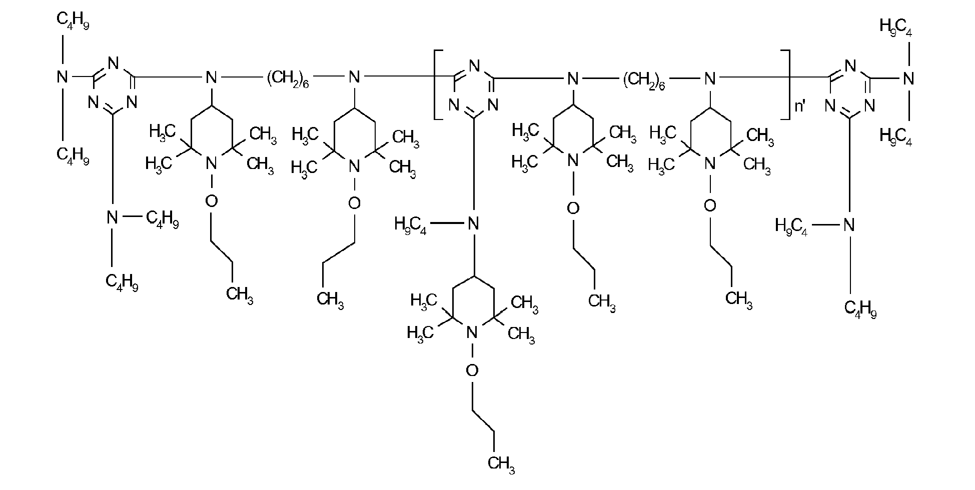 where n or n' is mainly from the range 3-5; or mixtures of these compounds.
   2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxydisubstituted oxanilides and mixtures of o- and p-ethoxy-disubstituted oxanilides.
   2.8. Further 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1 ,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-(2-hydroxy-4-[2-ethylhexyl]oxyphenyl)-4,6-di(4-phenylphenyl)-1,3,5-triazine, 2-(2-hydroxy-4-[2-heptylcarbonyloxyethoxy]phenyl)-4,6-diphenyl-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-(2-hydroxy-4-(2-ethylhexyl)oxy)phenyl-4,6-di(4-phenyl)phenyl-1,3,5-triazine, 2-[2-hydroxy-4-(2-hydroxy-3-dodecyloxy-propoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine.
3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl) methyl phosphite, bis(2,4-di-tert-butyl-6-methylphenyl) ethyl phosphite, 6-fluoro-2,4,8,10-tetra-tert-butyl-12-methyl-dibenz[d,g]-1,3,2-dioxaphosphocin, 2,2',2"-nitrilo[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
   Especially preferred are the following phosphites:
   Tris(2,4-di-tert-butylphenyl) phosphite (Irgafos^{®}168, Ciba-Geigy), tris(nonylphenyl) phosphite, 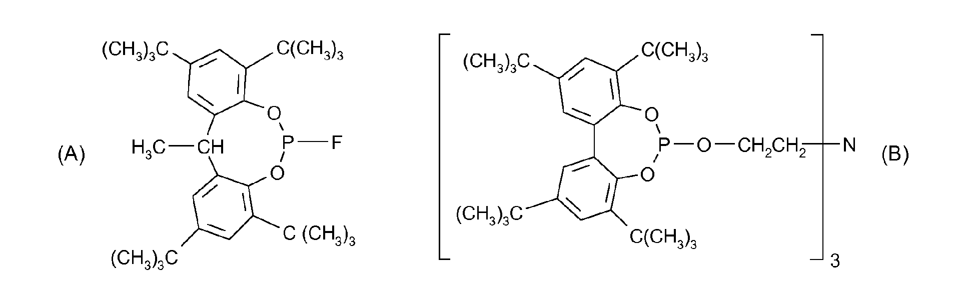 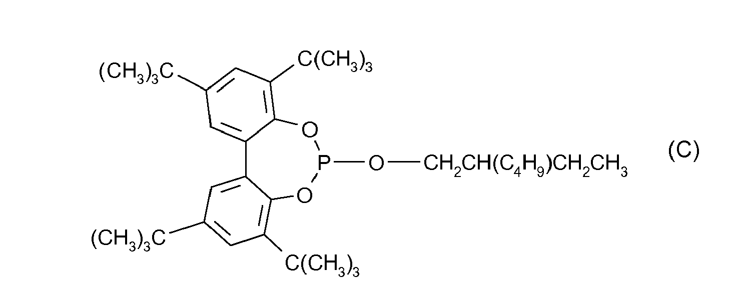 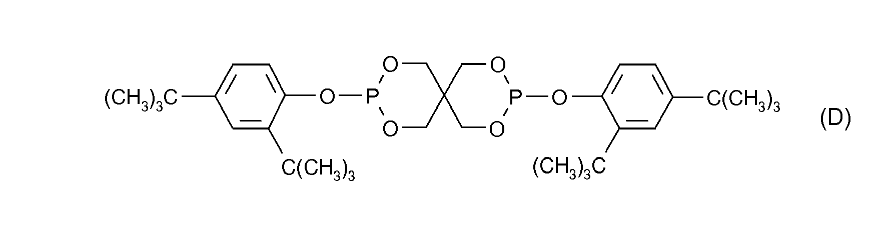 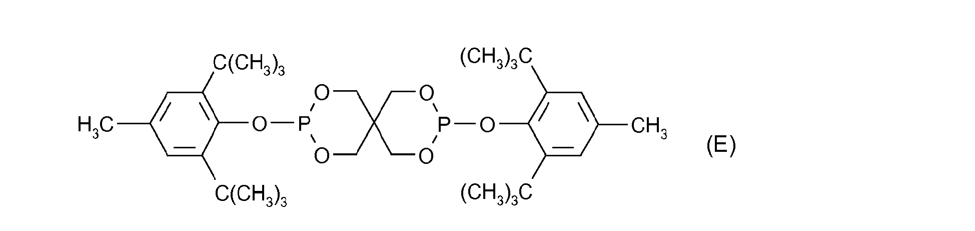 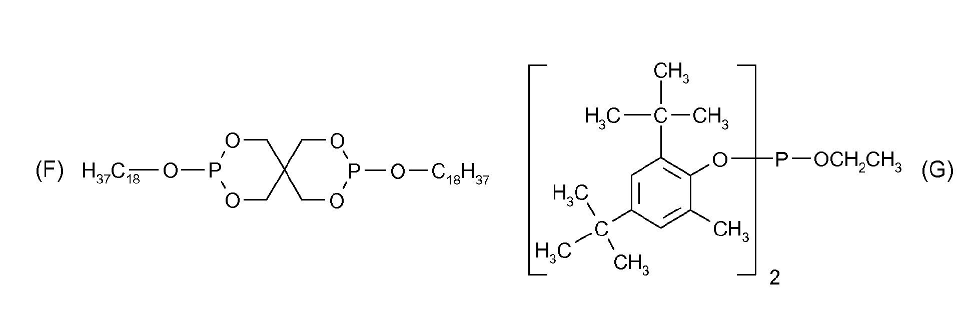
5. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example, N-benzyl-alpha-phenyl-nitrone, N-ethyl-alpha-methyl-nitrone, N-octyl-alpha-heptyl-nitrone, N-lauryl-alpha-undecyl-nitrone, N-tetradecyl-alpha-tridcyl-nitrone, N-hexadecyl-alpha-pentadecyl-nitrone, N-octadecyl-alpha-heptadecyl-nitrone, N-hexadecyl-alpha-heptadecyl-nitrone, N-ocatadecyl-alpha-pentadecyl-nitrone, N-heptadecyl-alpha-heptadecyl-nitrone, N-octadecyl-alpha-hexadecyl-nitrone, nitrone derived from N,N-dialkylhydroxylamine derived from hydrogenated tallow amine.
7. Thiosynergists, for example, dilauryl thiodipropionate or distearyl thiodipropionate.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilisers, for example, copper salts in combination with iodides and/or phosphorus compounds and salts of divalent manganese.
10. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example calcium stearate, zinc stearate, magnesium behenate, magnesium stearate, sodium ricinoleate and potassium palmitate, antimony pyrocatecholate or zink pyrocatecholate.
11. Nucleating agents, for example, inorganic substances such as talcum, metal oxides such as titanium dioxide or magnesium oxide, phosphates, carbonates or sulfates of, preferably, alkaline earth metals; organic compounds such as mono- or polycarboxylic acids and the salts thereof, e.g. 4-tert-butylbenzoic acid, adipic acid, diphenylacetic acid, sodium succinate or sodium benzoate; polymeric compounds such as ionic copolymers (ionomers). Especially preferred are 1,3:2,4-bis(3',4'-dimethylbenzylidene)sorbitol, 1,3:2,4-di(paramethyldibenzylidene)sorbitol, und 1,3:2,4-di(benzylidene)sorbitol.
12. Fillers and reinforcing agents, for example, calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.
13. Other additives, for example, oxygen absorbers, acetaldehyde scavengers, plasticisers, processing aids, lubricants, emulsifiers, clarifyers, pigments, rheology additives, catalysts, flow-control agents, optical brighteners, flameproofing agents, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one, 3-(3,4-dimethylphenyl)-5,7-di-tert-butyl-benzofuran-2-one, 3-(2,3-dimethylphenyl)-5,7-di-tert-butyl-benzofuran-2-one.

The nature and amount of the further stabilizers added are determined by the nature of the substrate to be stabilized and its intended use; in many cases from 0.01 to 5% by weight is used, based on the polymer to be stabilized.

Of certain technical importance is the addition of a processing aid, e.g. a fluoro elastomer, which may prevent the formation of deposits during or after extrusion of the cast film. These processing aids are often added in an amount of 0.1 to 2 %, typically 0.2 - 1 %, relative to the weight of the base polymer (for example: polyethylene). Thus, a typical LLDPE formulated according to the present invention contains, besides the compound of the formula I, about 500 ppm of of a fluoro elastomer, such as Dynamar® FX9614 (available from 3M).

The plastic container or film may also additionally contain an oxygen absorber, especially an iron based additive as oxygen absorber (oxygen scavenger).

It has been found that the freshness of food sealed in a transparent food package with use of an oxygen absorber may be unexpectedly enhanced, when the transparent packaging material contains a UV absorber: After packing under normal atmosphere or modified atmosphere with reduced oxygen partial pressure (using vacuum or inert gases such as nitrogen, carbon dioxide, argon) and air tight sealing, the scavenger acts with reducing the partial pressure of oxygen by the time to a harmless level. Depending on parameters like type of oxygen absorber employed, temperature, package dimensions , this induction period typically lasts between several hours and several days, during which oxidation processes may continue to alter the properties of the food, especially by fast photooxidation reactions. By blocking the major part of UV light with a UV absorber within the transparent container wall, photooxidation may be prevented and the protection gap during the induction period closed. Fruit and vegetables and, especially, fresh food of high protein and/or fat content such as meat, fish, diary products etc., may thus be kept longer on the shelf and retain better quality and appearance.

A further subject of the invention therefore is a sealed foodpackage or container comprising a transparent, especially clear or lightly coloured sheet or film made from plastic material, characterized in that
a) the plastic material contains a UV absorber, and
b) the package further comprises an oxygen scavenger.

The UV absorber in the plastic material is selected from hydroxyphenyl-s-triazines, 2-(2'-hydroxyphenyl)benzotriazoles, 2-hydroxybenzophenones and mixtures thereof, such as compounds listed above under sections 2.1, 2.2 and 2.8 and compounds of present formula (I); especially preferred are hydroxyphenyl-s-triazines such as compounds of the formula (I) described above, as well as the compounds
2-(2-hydroxy-3-t-butyl-5-methylphenyl)-5-chlorobenzotriazole,
2-(2-hydroxy-3,5-di-t-butylphenyl)-5-chlorobenzotriazole,
2-(2-hydroxy-5-methylphenyl)-benzotriazole,
2-(2-hydroxy-3,5-di-t-butylphenyl)-benzotriazole,
2-hydroxy-4-octyloxybenzophenone,
2-(2-hydroxy-4-octyloxyphenyl)-4,6-bis(2,4-dimethylphenyl)-1,3,5-triazine,
2-[4-(dodecyloxy/tridecyloxy-2-hydroxypropoxy)-2-hydroxy-phenyl]-4,6-bis(2,4-dimethylphenyl)-1,3,5-triazine,
2-(2-hydroxy-4-octyloxyphenyl)-4,6-di(4-phenylphenyl)-1,3,5-triazine.

Advantageously, type and amount of UV absorber (a) is sufficient to reduce the daylight UV radiation in the package to a level causing substantially no photooxidation within the induction time of the oxygen scavenger (b), especially by reducing the light intensity transmitted through the transparent polymeric material in the range 280-380 nm to 10% or less, especially to 5% or less.

Depending on the exact type of UV absorber used and the desired blocking effect, the UV absorber incorporated into the transparent film or container wall advantageously results in 0.01 to 10 g, e.g. about 0.05 to about 5 g, especially 0.1-1 g, of UV absorber per m² of film or wall.

Packaging films or sheets of the invention often contain more than one layer, at least one layer thereof containing the UV-absorber of formula I (multilayer material, see below) The polymeric material is preferably as described above for compositions containing the compound of formula (I), e.g. selected from polyester, polyolefin or ethylene-vinylacetate copolymer. The polymeric material may comprise one or more further additives, e.g. selected from clarifiers, phenolic antioxidants, phosphites and phosphonites, metal oxides and hydrotalcites, fluorescent brighteners, plasticisers, carboxylic acid salts such as stearates.

The transparent polymeric material often is a packaging film or UV shielding film of 10-200 µm thickness, or a wall of a plastic container. The oxygen scavenger (b) may be incorporated in the transparent polymeric material or in another part of the package or stored separately in the package..

Consequently, the invention further pertains to a method of preventing photooxidation of packed food, characterized in that the food is sealed in a package comprising a transparent, especially clear or lightly coloured, container or film made from plastic material,
wherein the plastic material contains a UV absorber, and
the package further contains an oxygen scavenger, and to
the use of an oxygen scavenger and transparent plastic container or film containing a UV absorber as a food packaging material protecting the packed food from photooxidation.

Oxygen absorbers to be used according to present invention may be known components including compounds or systems described in US patents Nos. 5'364'555; 4'536'409; 4'702'966; 5'605'996; 5'866'649; 5'096'724; 5'202'052; 94/09,084; 6'162'806; 6'083'585; 6'346'308; 6'406'766; 6'506'463; 6'509'436; 5'955'527; 5'639'815; 5'627'239; 5'641'825; 5'660'761; 5'736'616; 5'744'246; 5'776'361; 5'859'145; 6'139'770; 6'323'288; 6'333'087; 5'744'056; 6'369'148; 5'021'515; 5'049'624; 5'239'016; 5'952'066; 5'759'653; 6'210'601; 6'290'871; 5'981'676; 6'133'352; 6'143'197; 6'214'254; 6'254'802; 6'387'461; 6'139'770; 5'958'254; 6'346'200; 6'517'728; 6'410'156; 6'423'776; 6'479'160; 5'176'849; 5'211'875; 5'310'497; 5'346'644; 5'350'622; 5'425'896; 5'492'742; 5'529'833; 5'648'020; 5'798'055; 5'811'027; 6'284'153; 6'391'406; 6'465'065; 5'744'056; 5'885'481; 6'369'148; or in the publications WO 98/04,558; WO 01/29,116; WO 01/88,023; WO 00/37,321; WO 98/12,127; WO 99/15,432; WO 99/15,433; US-A-2001-0023025; WO 95/02,616; WO 95/04,776; WO 96/08,371; WO 96/40,799; WO 99/48,963; WO 00/011,972; WO 01/90,202; WO 01/90,238; WO 02/28,944; WO 02/33,024; WO 02/36,670; WO 02/57,328; US-A-2002-0037377; US-A-2002-0022144; WO 96/18,685; WO 96/18,686; US-A-2002-0063238; WO 00/64,775; WO 01/34,479; WO 01/03,521; WO 99/10,251; WO 02/051,825; WO 02/076,916; WO 01/89,830; US-A-2002-0099125; US-A-2003-0036605; WO 97/32,925; WO 98/12,250; WO 98/53,026; WO 91/17,044, including purely organic systems (e.g. based on salicylic acid, lactic acid, amines etc.); or systems based on an oxidizable metal component (e.g. the metals Fe, Zn, Co, Al, Mg, Cu, Sn, or oxidizable alloys, salts, complexes or metal-organic compounds thereof) and optional auxiliaries such as electrolytes, phosphates, binders, acidifiers. Use and incorporation of the oxygen scavenger may follow the method described in the literature, respectively.

Preferably, the oxygen scavenger is an additive based on an oxidizable iron or iron compound, e.g. as disclosed in US-5'744'056; US-5'885'481; US-6'369'148.

The additives of the invention and optional further components may be added to the polymer material individually or mixed with one another. If desired, the individual components can be mixed with one another before incorporation into the polymer for example by dry blending, compaction or in the melt.

The incorporation of the additives of the invention and optional further components into the polymer is carried out by known methods such as dry blending in the form of a powder, or wet mixing in the form of solutions, dispersions or suspensions for example in an inert solvent, water or oil. The additives of the invention and optional further additives may be incorporated, for example, before or after molding or also by applying the dissolved or dispersed additve or additive mixture to the polymer material, with or without subsequent evaporation of the solvent or the suspension/dispersion agent. They may be added directly into the processing apparatus (e.g. extruders, internal mixers, etc), e.g. as a dry mixture or powder or as solution or dispersion or suspension or melt.

The incorporation can be carried out in any heatable container equipped with a stirrer, e.g. in a closed apparatus such as a kneader, mixer or stirred vessel. The incorporation is preferably carried out in an extruder or in a kneader. It is immaterial whether processing takes place in an inert atmosphere or in the presence of oxygen, provided that the oxygen scavenger, if present, is not deactivated.

The addition of the additive or additive blend to the polymer can be carried out in all customary mixing machines in which the polymer is melted and mixed with the additives. Suitable machines are known to those skilled in the art. They are predominantly mixers, kneaders and extruders.

The process is preferably carried out in an extruder by introducing the additive during processing.

Particularly preferred processing machines are single-screw extruders, contrarotating and corotating twin-screw extruders, planetary-gear extruders, ring extruders or cokneaders. It is also possible to use processing machines provided with at least one gas removal compartment to which a vacuum can be applied.

Suitable extruders and kneaders are described, for example, in Handbuch der Kunststoffex-trusion, Vol. 1 Grundlagen, Editors F. Hensen, VV. Knappe, H. Potente, 1989, pp. 3-7, ISBN:3-446-14339-4 *(*Vol. 2 Extrusionsanlagen 1986, ISBN 3-446-14329-7*).*

For example, the screw length is 1 - 60 screw diameters, preferably 35-48 screw diameters. The rotational speed of the screw is preferably 10 - 600 rotations per minute (rpm), very particularly preferably 25 - 300 rpm.

The maximum throughput is dependent on the screw diameter, the rotational speed and the driving force. The process of the present invention can also be carried out at a level lower than maximum throughput by varying the parameters mentioned or employing weighing machines delivering dosage amounts.

If a plurality of components are added, these can be premixed or added individually.

The additives of the invention and optional further additives can also be sprayed onto the polymer material. They are able to dilute other additives (for example the conventional additives indicated above) or their melts so that they can be sprayed also together with these additives onto the material. Addition by spraying during the deactivation of the polymerization catalysts is particularly advantageous; in this case, the steam evolved may be used for deactivation of the catalyst. In the case of spherically polymerized polyolefins it may, for example, be advantageous to apply the additives of the invention, optionally together with other additives, by spraying.

The additives of the invention and optional further additives can also be added to the polymer in the form of a masterbatch ("concentrate") which contains the components in a concentration of, for example, about 1 % to about 40% and preferably 2 % to about 20 % by weight incorporated in a polymer. The polymer must not be necessarily of identical structure than the polymer where the additives are added finally. In such operations, the polymer can be used in the form of powder, granules, solutions, suspensions or in the form of latices.

Incorporation can take place prior to or during the shaping operation, or by applying the dissolved or dispersed compound to the polymer, with or without subsequent evaporation of the solvent. In the case of elastomers, these can also be stabilized as latices. A further possibility for incorporating the additives of the invention into polymers is to add them before, during or directly after the polymerization of the corresponding monomers or prior to crosslinking. In this context the additive of the invention can be added as it is or else in encapsulated form (for example in waxes, oils or polymers).

In a specific embodiment the plastic container or film or sheet is a multilayer construction of 2 to 7 polymer layers containing the UV absorber of the invention or a mixture thereof in at least 1 layer. In this case, the polymer composition of the invention may contain a relatively large amount of the compatible hydroxyphenyltriazine stabilizer, for example 1-15% by weight, and is applied or incorporated in a thin layer (e.g. 5-100 µ) to a shaped article made from a polymer containing little or no stabilizer of the invention, e.g. a film. Application can be made at the same time as the shaping of the base article, for example by coextrusion. Alternatively, application can be made to the base article after it has been shaped, for example by lamination with a film or by coating with a solution. The external layer or layers of the finished article has or have the function of a UV filter which protects the interior of the article and/or inner layer(s) against UV light.

Still a further subject of the invention is the use of a compound of formula (I) or (III) or a mixture thereof which is incorporated into a plastic container or film or sheet, for content protection of packaged foodstuffs, beverages, pharmaceuticals, cosmetics or personal care products.

The following examples illustrate the invention. All parts or percentages, in the examples as in the remainder of the description and in the claims, are by weight, unless stated otherwise. Room temperature denotes a temperature in the range 20-30 °C, unless stated otherwise. Data given for elemental analysis are in % by weight calculated (cal) or experimentally measured (exp) for the elements C, H and N. In the examples, the following abbreviations are used:
- % w/w: percent by weight;
- I: litre;
- m.p.: melting point or range;
- PP: polypropylene;
- LDPE: low density polyethylene;
- DSC: differential scan calorimetry;
- NMR: nuclear magnetic resonance (of ¹H, if not otherwise indicated);
- ε at λₘₐₓ: molar extinction coefficient (I , mol⁻¹cm⁻¹) at long wavelength UV absorption maximum;
- Mn: number average of molecular mass (g/mol) as determined by GPC;
- GPC: gel permeation chromatography;
- PDI: polydispersity (ratio of mass and number average of molecular weight).

In the following examples, the molecular weight parameters (Mn, Mw, PDI) are determined by GPC (Gel Permeation Chromatography). The GPC measurements are carried out on a Perkin Elmer LC 50 liquid chromatograph equipped with a reflective index Perkin Elmer LC 30 and the data are calculated by using a Perkin Elmer software (TurboSEC). All GPC measurements are carried out by using 0.02 M di-ethanol-amine solution in chromatographic grade tetrahydrofuran (THF) as solvent at 45 °C. The columns used are PLGEL (Polymer Laboratories) 300 mm x 7.5 mm, stationary phase 3 mm Mixed E, supplied by Polymer Laboratories. Polystyrene standards are used for the calibration curve.
Visual melting points and melting ranges are measured by using a Gallenkamp equipment. The extinction coefficients (e) are calculated by recording the UV spectra of the products in methylene chloride or toluene solutions on a Perkin Elmer Lambda 2S spectrophotometer.

### A: Preparation Example

### Example A1

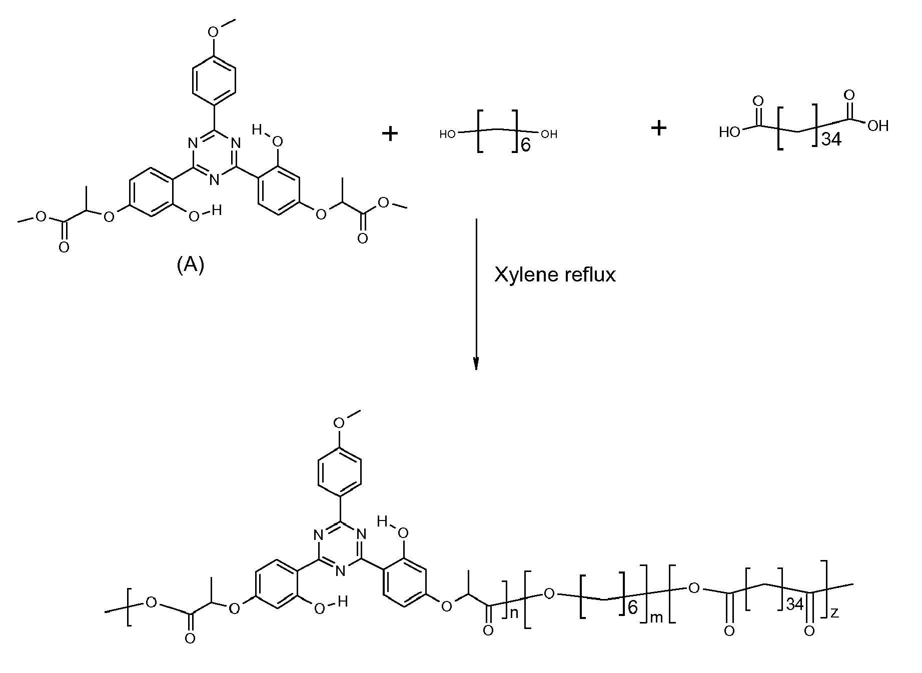

n:m:z=0.6:1:0.4

In a reaction flask 103.59g (0.18 mol) of monomer (A), 35.4 g (0.3 mol) of 1,6-hexanediol, 68.4g (0.12 mol) of dimer acid hydrogenated and 2 g of p-toluene sul-phonic acid are added in 210 ml of xylene. The mixture is refluxed for 9 hours and xylene, water and methanol are distilled off. The reaction mass is cooled to 120°C and 750 ml of xylene are added. The solution is cooled at 80°C and washed four times with water. The or-ganic layer is then dried under vacuum, yielding a product with melting range 80-92 °C.

### Example A2

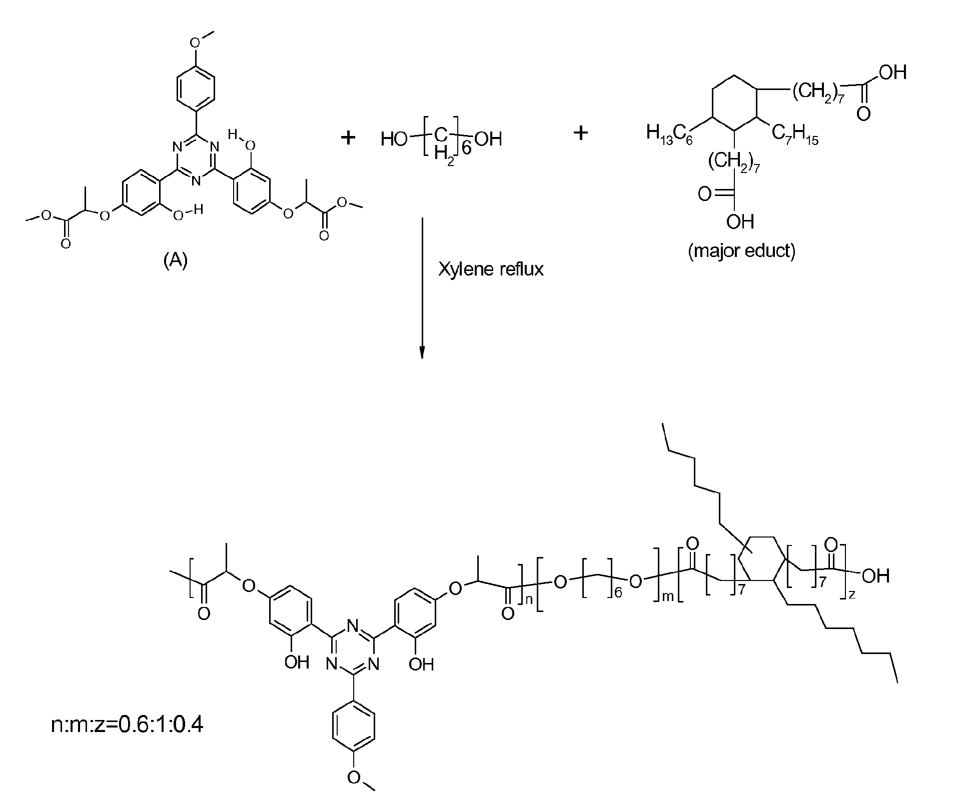

In a reaction flask 103.59g (0.18 mol) of monomer (A), 35.4 g (0.3 mol) of 1,6-hexanediol, 68.4g (0.12 mol) of the above cycloalkylene diacid (CAS 68783-41-5; isomer mixture; available from Cognis or Sigma) and 2 g of p-toluene sulphonic acid are added in 210 ml of xylene. The mixture is refluxed for 9 hours and xylene, water and methanol are distilled off. The reaction mass is cooled to 120°C and 750 ml of xylene are added. The solution is cooled at 80°C and washed four times with water. The organic layer is then dried under vacuum, yielding a product with melting range 80-92 °C.

The educt of CAS No. 68783-41-5 is a mixture of compounds; besides the major educt shown in the scheme above, it usually contains open chain and/or unsaturated components, the molecular weight ranging from about 562 to about 566 g/mol.

### Example A3

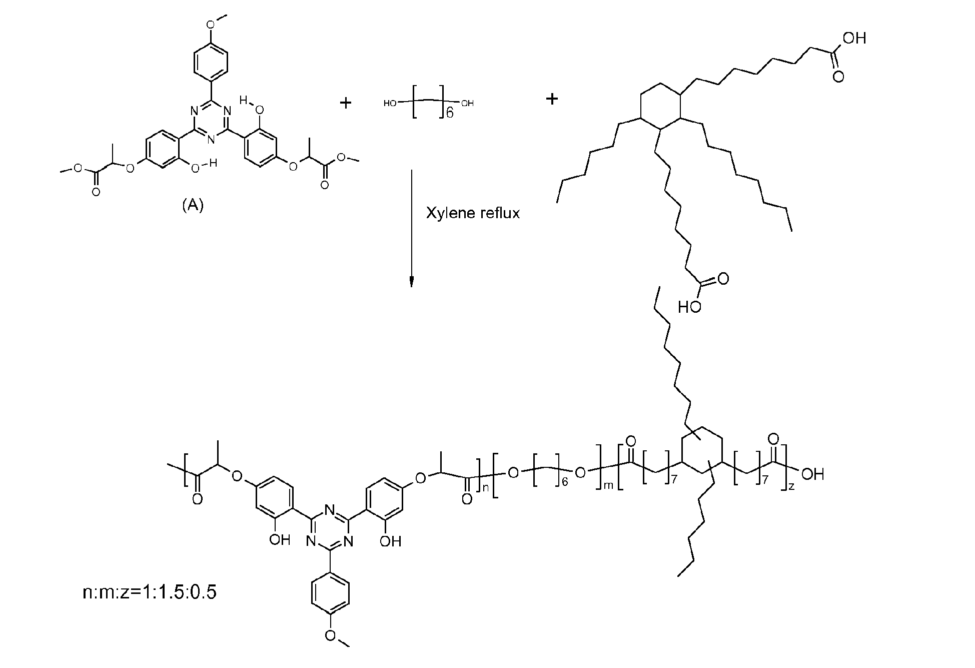

In a reaction flask 57.50 g (0.10 mol) of monomer (A), 17.70 g (0.15 mol) of 1,6-hexanediol, 28.50 g (0.05 mol) of the above cycloalkylene diacid (CAS 68783-41-5; isomer mixture; available from Cognis or Sigma) and 1.2 g of p-toluene sulphonic acid are added in 100 ml of xylene. The mixture is refluxed for 10 hours and xylene, water and methanol are distilled off. The reaction mass is cooled to 120°C and 500 ml of xylene are added. The solution is cooled at 80°C and washed four times with water. The organic layer is then dried under vacuum, yielding a product with melting range 90-99 °C.

### B: Application Examples

### Example B1

17 g of the product of the example A2 is mixed with 983 g of milled LLDPE (Dowlex® NG 5056E, supplied by Dow Chemical, characterized by a density of 0.919 g/cm³ and a melt flow index (190°C/2.16 kg) of 1.1). The mixture is extruded at 230°C in a OMC® twin-screw extruder. Granules obtained are blown (Formac® lab-scale blow extruder) at 230°C to a film of about 50 µm thickness.

A UV-Vis spectrum is recorded from the film in the range 200-800nm (Perkin-Elmer lambda 20 spectrophotometer, equipped with a RSA-PE-20 Labsphere integrating sphere), showing a broad absorption maximum at about 336 nm; transmittance and integrated transmittance data are shown in the following table.

| | | | | | | |
|---|---|---|---|---|---|---|
| Wavelength (nm) | | 315 | 365 | 280-370 | 280-390 | 400-700 |
| Transmittance (%) | 2.0 | 5.2 | 3.2 | 8.1 | 92 | |

Another film sample is prepared correspondingly without UV absorber for comparison purposes (blank film), showing a transmittance of 93 % in the range 400-700 nm.

The film of the invention shows the following further properties:

| | |
|---|---|
| Yellowness Index difference vs. blank film (ASTN E 313-96): | 1.5 |
| Haze value (ASTM D 1003-61): | 8.6% |

The polymer composition of the invention shows good UV absorption, excellent transmittance of visible light and low yellowing and haze.

### Example B2

20g of the product of the example A3 is processed in the same conditions as in example B1 to give a LLDPE film of about 50 µm thickness.

The UV-Vis spectrum recorded from the film in the range 200-800nm shows a broad absorption maximum at about 337 nm. The transmittance and integrated transmittance data determined as in example B1 are shown in the following table.

| | | | | | |
|---|---|---|---|---|---|
| Wavelength (nm) | 315 | 365 | 280-370 | 280-390 | 400-700 |
| Transmittance (%) | 1.0 | 2.2 | 1.5 | 5.1 | 91 |

The film of the invention shows the following further properties:

| | |
|---|---|
| Yellowness Index difference vs. blank film (ASTM E 313-96): | 1.8 |
| Haze value (ASTM D 1003-61): | 14.3% |

The polymer composition of the invention shows excellent UV absorption, good transmittance of visible light and low yellowing and haze.

### Example B3

13g of the product of the example A2 is mixed with 6g of micronized zinc oxide or 2g of micronized titanium dioxide respectively and with 981g or 985g respectively of milled LLDPE and then processed in the same conditions of the previous examples to give films of about 50 µm thickness.

The integrated transmittance data and the haze values determined as in the previous examples are shown in the following table.

| Wavelength (nm) | %T 280-390 | %T 400-700 | %Haze |
|---|---|---|---|
| 1.3% ex.A2 + 0.6% ZnO | 9.9 | 91 | 13.8 |
| 1.3% ex.A2 + 0.2% TiO₂ | 9.9 | 91 | 14.1 |

The polymer composition of the invention shows good UV absorption, good transmittance of visible light and low haze.

### Example B4

The product of the example A2 is utilized in the preparation of an industrial multi-layer extrusion cast film. Such a film is made of 5 layers, having the following structure and composition, going from one surface to the other (the approximate thickness of each layer is reported into brackets):
- LLDPE (Dowlex® NG 5056E, Dow Chemical) containing 1.7% by weight of the product of example A2 (20 µm)
- Adhesive layer (Admer® NF518E, Mitsui Chemicals, 3 µm)
- EVOH (type F171 B, Eval Europe) barrier layer (10 µm)
- Adhesive layer (Admer® NF518E, Mitsui Chemicals, 3 µm)
- LLDPE (Dowlex® NG 5056E, Dow Chemical) containing 1.7% by weight of the product of example A2 (20 µm)

Another film sample is prepared correspondingly without UV absorber for comparison purposes (blank film).

The integrated transmittance data determined as in the previous examples are shown in the following table.

| | | | |
|---|---|---|---|
| Wavelength (nm) | 280-370 | 280-390 | 400-700 |
| Transmittance (%) | 8.8 | 14.6 | 92 |

The film of the invention shows the following further properties:

| | |
|---|---|
| Yellowness Index difference vs. blank film (ASTM E 313-96): | 0.5 |
| Haze value (ASTM D 1003-61): | 3.6% |

The polymer composition of the invention shows good UV absorption, excellent transmittance of visible light, very low yellowing and minimal haze.

### Example B5

In order to assess the positive effect of the shielding of the UV radiation from the polymer compositions of the invention on the storage of edible goods, the polymer composition of the example B1 is used for the following experiment, where a piece of boiled ham is placed inside a packaging constituted in the following manner: the packaging is made of a glass container with inlet and outlet valves for gas purging and a quartz cover that can be hermetically sealed. An atmosphere containing 2% of oxygen is fluxed inside the container and the film with the polymer composition of example B1 is placed on top of the quartz cover. The container is placed at 5°C under four fluorescent lamps of type "cool white". After 4 days, the color index a* (ASTM E 313-96) of the ham is measured with a colorimeter, as compared to a film packaged and stored in the same conditions, but without UV screening. The result is reported in the following table:

| sample | a* index |
|---|---|
| 1.7% ex.A2 | -5.2 |
| blank film | -9.3 |

The ham packed under the film of the invention retains the red shade of the meat distinctly better than the ham packed under a conventional film (blank film).

### Example B6

The barrier 5-layer film of example B4 is used as a food packaging film in the following experiment. Pieces of boiled ham are stored in glass containers open on the top (diameter 105 mm, height 60 mm, named A, B and C, respectively) and equipped with inlet and outlet valves for gas purging.

Container A is covered with the barrier film described in example B4 (film of the invention containing the UVA of example A2). The film is placed on the top of the container and silicon-sealed. An atmosphere containing 5% of oxygen is fluxed inside the packaging. About 200 cm² of the interior side walls are coated with a 125 µm thick extrusion cast LDPE film (6401, Dow Chemicals) containing 50% of the oxygen scavenger Shelfplus^{®} O₂, in order to further reduce the oxygen level in the package.
Shelfplus^{®} O₂ is an iron based oxygen scavenger available from Ciba Specialty Chemicals.

Container B (comparative sample) is sealed with a blank barrier film having the same structure and composition as the film of container A, but without UVA product in it. The interior side walls of container B are coated with the same film as the film used for container A. The atmosphere inside the packaging is the same as that of container A.

Container C (comparative sample) is sealed with the blank film used for container B, but the film on turn is covered by a black piece of cardboard, so that no light can enter into the packaging. The interior side walls of container C are coated with the same film as the film used for container A. The atmosphere inside the packaging is the same as that of container A.

The containers are stored at 5°C under four "cool white" fluorescent lamps; the appearence of the packed ham is evaluated with respect of changes in visual aspects and color.

The ham packed according to the invention retains the red shade of the meat distinctly better than the ham packed under a conventional film (B, blank film).

## Claims

1. A method of preventing photooxidation of packed food, **characterized in that** the food is sealed in a package or container comprising a transparent sheet or film made from plastic material, wherein the plastic material contains a UV absorber selected from the hydroxyphenyl-s-triazines, 2-(2'-hydroxyphenyl)benzotriazoles, 2-hydroxybenzophenones, and mixtures thereof, and
the package further contains an oxygen scavenger.

2. Method of claim 1, wherein the plastic material comprises a polyolefin, a polyester, a polyvinylalcohol, a polyvinylacetate or a polycarbonate.

3. Method of claim 1, wherein the UV absorber is used in an amount from 0.01 g to 10 g per square meter of transparent sheet or film.

4. Method of claim 1, wherein and the oxygen scavenger is an additive based on an oxidizable iron or iron compound.
